## Europäisches Patentamt

## European Patent Office

## Office européen des brevets

(11) Publication number: **0 099 719**
**B1**

(12) **EUROPEAN PATENT SPECIFICATION**

(45) Date of publication of patent specification: **31.01.90**

(51) Int. Cl.⁵: **H 02 G 15/04**

(21) Application number: **83304047.0**

(22) Date of filing: **12.07.83**

(54) **Prefabricated rubber-elastic enclosure for electrical cables.**

(30) Priority: **13.07.82 DE 3226124**

(43) Date of publication of application:
**01.02.84 Bulletin 84/05**

(45) Publication of the grant of the patent:
**31.01.90 Bulletin 90/05**

(84) Designated Contracting States:
**AT BE CH FR GB IT LI NL SE**

(56) References cited:
**DE-A-2 223 394**
**DE-A-2 445 219**
**FR-A-2 370 221**
**US-A-3 992 570**

(73) Proprietor: **MINNESOTA MINING AND MANUFACTURING COMPANY**
**3M Center, P.O. Box 33427**
**St. Paul, Minnesota 55133 (US)**

(72) Inventor: **Rosenthal, Bernd**
**3M Electrical Lab. GmbH Georg-Wilhelm-Strasse 183**
**D-2102 Hamburg 93 (DE)**
Inventor: **Krabs, Raymond**
**3M Electrical Lab. GmbH Georg-Wilhelm-Strasse 183**
**D-2102 Hamburg 93 (DE)**
Inventor: **Bock, Manfred**
**3M Electrical Lab. GmbH Georg-Wilhelm-Strasse 183**
**D-2102 Hamburg 93 (DE)**

(74) Representative: **Baillie, Iain Cameron et al**
**c/o Ladas & Parry Isartorplatz 5**
**D-8000 München 2 (DE)**

Courier Press, Leamington Spa, England.

## Description

The invention relates to a prefabricated rubber-elastic enclosure adapted to be expandingly slid onto electrical cables in cable connections or cable terminations, the enclosure possibly having electrical stress-controlling properties.

Background art

A non-expanding enclosure is disclosed in DE—A—2 223 394 which has a prefabricated enclosure adapted to be slid onto electrical cables and having electrical stress-controlling properties. The reference has a pair of conical elements connected such that the conical elements are connected by their bases and a longitudinal bore is provided through the conical elements, which longitudinal bore has spiral ribs with bead-like elevations. Such an enclosure however is difficult to slide onto an electrical cable.

For this reason it is desirable to provide an enclosure which can be expandingly slid onto an electrical cable and such enclosures are long since of prior art (British Patent No. 1,358,916, West German Patents Nos. 24 45 219, 28 21 017, 29 03 255). In application, they offer the advantage that no further working steps are necessary in addition to the sliding on in order to apply the enclosure tightly and preferably sealingly on the cable. More particularly, no work is necessary which requires particular care or skill and thus could easily result in faults, such as the shrinking-on (e.g. West German Patents Nos. 19 25 006, 20 21 203, 28 20 626) or the welding-on (e.g. West German Patent No. 28 01 848). Despite these facts, expanding slide-on enclosures have not achieved general acceptance because in the sliding on, the part of the enclosure which has already been slid on will, due to the expansion, contact the cable with a high contacting pressure and further sliding on will accordingly require a considerable force; this will be particularly true if in the interest of a good sealing, one will employ a relatively large expansion, i.e. a relatively narrow enclosure, and/or an enclosure which is relatively long in the sliding on direction. These difficulties will become particularly apparent if in a cable termination or the like, a plurality of cable cores have each to be provided with an enclosure. In this connection, it has been found that also the use of sliding aid means, for instance grease (as described, for instance, in West German Patent No. 29 03 255), will not result in a substantial improvement.

In order to overcome the aforedescribed difficulties, it has also become known to use an enclosure which can be loosely slid on and to compress it after the sliding on by means of clamps so that the enclosure will tightly contact the enclosed object (German Auslegeschrift 1 016 791). In doing so, an additional step is thus again necessary which must be performed with care. Moreover, practical success can hardly be guaranteed because usual rubber-elastic materials are not appreciably compressible.

Disclosure of invention

In the present specification, the expression "rubber-elastic material" shall mean that a material is highly expandable, similar to rubber. Materials of that kind are, for instance, usual rubber types, polychloroprene, silicon rubber and the like. Of these materials, those rubber-elastic materials are of particular practical importance which show a high durability against environmental influences, electrical fields, electrical glow discharges, and elevated temperatures, and which retain their elastic properties over long periods of time. Materials of that kind are known, particularly in the form of silicon rubber.

It is the object of the invention to provide a prefabricated rubber-elastic enclosure which is adapted to be expandingly slid onto electrical cables and the like, and which can be easily slid on even under relatively high contact pressures.

According to the invention, that object is attained with an enclosure of the kind initially indicated, which is characterized in that the enclosure interior surface is provided with a plurality of discrete spaced protrusions each having a circular base portion and which protrusions are distributed over a major part of the interior surface and dimensioned and arranged so that in the slid on condition, the contact pressure resulting from the expansion is essentially concentrated to the high areas of the protrusions.

With the enclosure according to the invention, the surface across which the already slid on portions of the enclosure contact the cable with a high contact pressure, is very greatly reduced because this involves only the tip areas of the protrusions. It has been found that this will make possible a surprisingly easy sliding on of the enclosure. Since the protrusions do not extend over a large continuous surface area the enclosure as a whole is almost as strongly elastically expandable as a comparable enclosure without protrusions. The round shape of the protrusions will take care that the surfuce areas being under high contact pressure will increase only slightly even under very high contacting pressures. Furthermore, the round shape of the protrusions is advantageous because thereby, the protrusions can easily slide over possible irregularities of the surface of the enclosed object without causing damages or becoming damaged themselves. The manufacture of the protrusions is very simple; this is particularly true if the protrusions are unitarily molded to a base of uniform thickness.

For the sliding on of the enclosures according to the invention, neither tools nor additional materials are required. The enclosures can be employed also with open air installations. Depending on the dimensioning, they are particularly well suited for medium and low voltage cables. The material of the enclosure can be selected within wide limits; particularly, also desirable electrical properties can be adjusted in this manner as desired.

The surprising good sliding properties obtainable by the protrusions cannot be achieved with continuous larger elevations, for instance in the form of skids, rings, and the like.

It is advantageous to distribute the protrusions at mutual distances so large that the protrusions are movable essentially independently of each other. Thereby, the migration of the enclosure upon being slid on can continue in a wave-like manner. This facilitates the sliding on even further. Also, it is ensured thereby that the elastic expandability of the enclosure is not significantly affected by the protrusions. In most cases, a uniform distribution of the protrusions will be preferable because this simplifies the manufacture and results in uniform sliding properties throughout.

The protrusions are advantageously designed in the form of sphere segments. The molds required therefore can be easily manufactured. The sphere segments unite in themselves particularly good sliding properties with a high strength against deformation even under the contacting pressure produced by the expansion. This is particularly true if the sphere segments extend over less than half of a sphere, preferably over about one fourth to one third of a sphere diameter.

Because of the excellent sliding properties of the enclosure according to the invention, also adjacent cables having different thicknesses can be easily enclosed with one and the same enclosure. Also, overlappings of several enclosures according to the invention can be easily formed. It is possible thereby to enclose cables of more complicated shape section-wise with a plurality of enclosures of less complex shape in an overlapping manner.

In general, it will be advantageous if the enclosure comprises at least one end portion without protrusions, the end portion being adapted to encircle the cable. Thereby, the enclosure can be better sealed to the cable. Since the end portion free of protrusions need be so large only as it is necessary to obtain the desired good sealing, it will only inessentially affect the ease of the sliding on the enclosure, particularly if the end portion free of protrusions will be slid on as the last portion of the enclosure. Moreover, during the sliding on the end portion free of protrusions may be folded back over the adjacent portion having protrusions.

Furthermore, the important advantage has been found that when using a sliding aid means, for instance grease, the protrusions will not run dry even over elongated sliding on distances because sliding aid means which has been pushed aside will, upon continued sliding on, be again squeezed between subsequent other protrusions. It is particularly advantageous to provide the sliding aid means on the interior surface of the prefabricated enclosure. Then, no sliding aid means need be available at the site of application.

The invention will be explained at more detail in the following by means of an embodiment in connection with the drawings.

Brief description of the drawings

Figure 1 is an elevation view, with parts broken away, of a cable termination having enclosures according to the invention.

Figure 2 is an elevation view, partially in section, of an enclosure according to the invention, the view being turned by 90° and enlarged as compared with Figure 1.

Figure 3 is an elevation view, partially in section, of another embodiment of an enclosure according to the invention.

Best mode for carrying out the invention

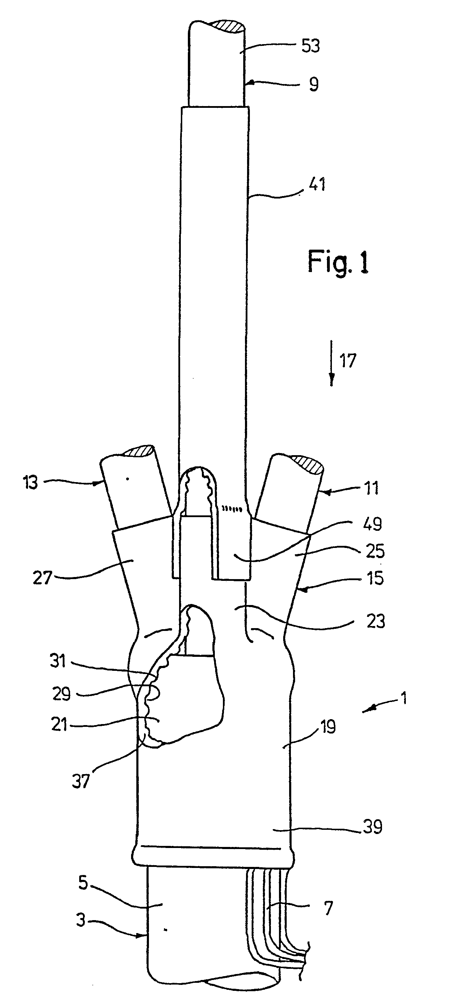

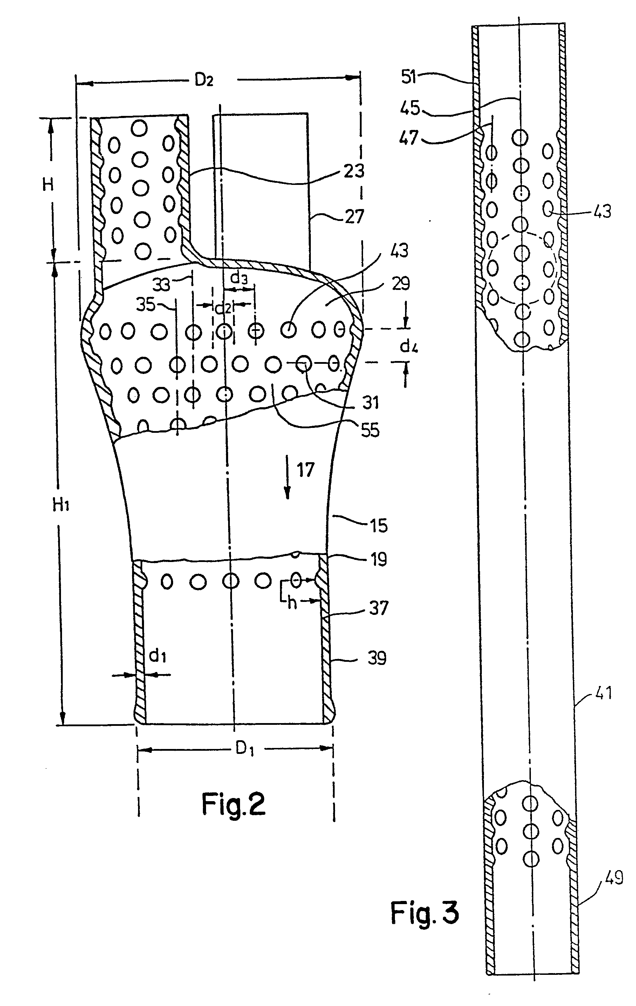

Figure 1 illustrates a cable termination 1 at the end of an electrical three-core cable 3. At the cable 3, a part of a cable sheath 5 which in the embodiment illustrated consists of plastic, has been removed. A metallic shield 7 which is possibly present can be bent back over the cable sheath 5, or can be conducted away from the cable termination through a separate opening. Of the cable cores, end portions 9, 11, 13 are exposed. Onto the cable end so prepared, a three-fingered enclosure 15 had been slid on in the direction of the arrow 17. The enclosure 15 consists of highly rubber-elastically expandable polychloroprene and has a pocket-like first portion 19 which had been slid, while being elastically expanded, onto an end portion 21 of the cable sheath, and a plurality of finger-like second portions 23, 25, 27 which depend from the pocket-like first portion 19 and which had been slid, while being elastically expanded, onto the core end portions 9, 11, 13. The sleeve 15 is outwardly smooth and is provided on its interior surface 29 with spaced round protrusions 31 which are distributed at mutual distances uniformly in rows, e.g. 33, 35 (Figure 2). In the embodiment illustrated, the rows extend in the sliding on direction (arrow 17). The protrusions are molded unitarily to a base 37 of uniform thickness and have the shape of sphere segments which extend across about 1/4 of a sphere diameter. At the cable-sided end, the enclosure 15 has an end portion 39 without protrusions, which encircles the cable 3. That end portion contacts the cable 3 sealingly, due to the elastic tension generated by the expansion upon the sliding on. Further enclosures of rubber-elastic material have been slid onto the core end portions 9, 11, 13; those enclosures are designed to sealingly overlap with the finger-like second portions 23, 25, 27. In Figure 1, only a single enclosure 41 of this kind is illustrated, namely, on the core end portion 9. The structure of the enclosure 41 can be seen from Figure 3. The enclosure 41 consists also of highly rubber-elastic and expandable polychloroprene and is interiorly provided with protrusions 43 which are similar to the protrusions 31 but may possibly be smaller than the latter, corresponding to the fact that the diameter of the enclosure 41 is smaller as compared with the enclosure 15. Also the protrusions 41 are distributed uniformly in mutually staggered rows, e.g. 45, 47. In end portions 49, 51 of the enclosure 41, protrusions are not provided. In the sense of Figure 1, the lower end portion 49 sealingly contacts, under mechanical tension, the smooth outside of the associated second portion 23 of the three-fingered enclosure 15, and the (in the sense of Figure 1) upper end portion 51 of the enclosure 41 contacts sealingly the insulation 53 of the core 9. Thereby, the throughgoing sealing is obtained between the insulating sheaths of the cores and the insulating sheath 5 of the cable 3.

The size and the arrangement of the protrusions 43 is selected so that in the slid-on condition (Figure 1), the areas 55 (Figure 2) disposed between the protrusions do not, or only very slightly, contact the enclosed cable. Generally, practicable results are obtained if the height h (Figure 2) of the protrusions 43 is about 0.5 to 1.0-times the thickness $d_1$ (Figure 2) of the base 37, if the protrusions are sphere segments which extend across about 1/4 to 1/3 of the sphere diameter, and if the center diameter $d_3$ (Figure 2) between each two protrusions is about twice the protrusion diameter $d_2$ (Figure 2). For instance, an enclosure of polychloroprene according to Figure 2 may have the following dimensions according to Figure 2: $D_1=50$ mm, $D_2=70$ mm, $H_1=120$ mm, $H_2=35$ mm, $d_1=2$ mm, $d_2=4$ mm, $d_3=8$ mm, $d_4=8$ mm, h=1 mm.

The encloxures may be designed to be slightly electrically conductive and/or to have stress-controlling properties, for instance in accordance with the West German Patent No. 28 21 017.

As will be readily appreciated, the application of the aforedescribed prefabricated enclosures which due to the protrusions can be very easily expandingly slid on will greatly facilitate the manufacture of the cable termination illustrated. The sealingly overlapping enclosures 15 and 41 reliably seal the crotch area of the cable end and can also act as an additional electrical insulation.

## Claims

1. A prefabricated rubber-elastic enclosure adapted to be expandingly slid onto electrical cables in cable terminations or cable connections, the enclosure possibly having electrical stress-controlling properties, characterized in that the enclosure (15; 41) interior surface is provided with a plurality of discrete spaced protrusions (31, 43) each having a circular base portion and which protrusions are distributed over a major part of the interior surface and dimensioned and arranged so that in the slid on condition, the contact pressure resulting from the expansion is essentially concentrated to the high areas of the protrusions.

2. An enclosure according to claim 1, characterized in that the protrusions (31) are unitarily molded to a uniform thickness base (37).

3. An enclosure according to claim 1 or 2, characterized in that the protrusions (31; 43) are uniformly distributed at mutual distances so large that they are movable essentially independently of each other.

4. An enclosure according to any one of the preceding claims, characterized in that the protrusions (31; 43) are sphere segments extending through less than half of a sphere.

5. An enclosure according to claim 4, characterized in that the sphere segments extend through about one fourth to one third of a sphere diameter.

6. An enclosure according to any one of the preceding claims, characterized in that it comprises at least one end portion (39) without protrusions, the end portion being designed to encircle the cable.

7. An enclosure according to any one of the preceding claims, characterized in that it is provided with sliding aid means on its interior surface.

8. An enclosure according to any one of the preceding claims, characterized in that it is designed to be slid onto an end portion of an electrical multi-core cable (3), with a cable sheath (5) being removed over a distance, and core end portions (9, 11, 13) of the cable (3) being exposed in the cable end portion, and in that the enclosure (15) comprises a pocket-like first portion (19) adapted to be expandingly slid onto an end portion of the cable sheath (5) and a plurality of finger-like second portions (23, 25, 27) depending from said first portion and being adapted to be expandingly slid onto the core end portions (9, 11, 13).

## Patentansprüche

1. Vorgefertigte gummielastische Hülle, die unter Aufweitung auf elektrische Kabel in Kabelanschlüssen oder Kabelverbindungen aufschiebbar ist und die gegebenenfalls elektrische Beanspruchungen steuernde Eigenschaften hat, dadurch gekennzeichnet, daß die Innenwandung der Hülle (15; 41) mit einer Mehrzahl von in Abständen voneinander angeordneten, diskreten Vorsprüngen (31, 43) versehen ist, die je einen kreisförmigen Basisteil haben und die über den größeren Teil der Innenwandung verteilt und so bemessen und angeordnet sind, daß bei aufgeschobener Hülle der auf die Aufweitung zurückzuführende Berührungsdruck im wesentlichen auf die erhöhten Bereiche der Vorsprünge beschränkt ist.

2. Hülle nach Anspruch 1, dadurch gekennzeichnet, daß die Vorsprünge (31) an einen Basisteil (37) von einheitlicher Dicke einstückig angeformt sind.

3. Hülle nach Anspruch 1 oder 2, dadurch gekennzeichnet, daß die Vorsprünge (31; 43) mit solchen Abständen voneinander gleichmäßig verteilt sind, daß sie im wesentlichen unabhängig voneinander bewegbar sind.

4. Hülle nach einem der vorhergehenden Ansprüche, dadurch gekennzeichnet, daß die Vorsprünge (31; 43) Kugelkalotten sind, die aus weniger als einer Halbkugel bestehen.

5. Hülle nach Anspruch 4, dadurch gekennzeichnet, daß die Kugelkalotten sich über etwa ein Viertel bis ein Drittel des Durchmessers einer Kugel erstrecken.

6. Hülle nach einem der vorhergehenden Ansprüche, dadurch gekennzeichnet, daß es mindestens einen Endteil (38) besitzt, der keine Vorsprünge besitzt und zum Umschließen des Kabels geeignet ist.

7. Hülle nach einem der vorhergehenden Ansprüche, dadurch gekennzeichnet, daß sie auf ihrer Innenwandung mit Gleithilfsmitteln versehen ist.

8. Hülle nach einem der vorhergehenden Ansprüche, dadurch gekennzeichnet, daß sie so ausgebildet ist, daß sie auf einen Endteil eines mehradrigen elektrischen Kabels (3) aufschiebbar ist, wobei ein Kabelmantel (5) über eine Strecke entfernt ist und Aderendteile (9, 11, 13) des Kabels (3) in dem Kabelendteil freiliegen, und die Hülle (15) einen taschenartigen ersten Teil (19) besitzt, der unter Aufweitung auf einen Endteil des Kabelmantels (5) aufschiebbar ist, sowie eine Mehrzahl von fingerartigen zweiten Teilen (23, 25, 27), die sich von dem ersten Teil abwärts erstrecken und unter Aufweitung auf die Aderendteile (9, 11, 13) aufschiebbar sind.

**Revendications**

1. Enveloppe préfabriquée, élastique à la manière du caoutchouc, destinée à être glissée avec expansion ou dilatation sur des câbles électriques dans les terminaisons de câble ou dans les connexions de câbles, cette enveloppe présentant éventuellement des propriétés de contrôle des contraintes électriques, caractérisée en ce que la surface intérieure de l'enveloppe (15; 41) comporte une série de saillies espacées distinctes (31, 43), présentant chacune une partie de base circulaire, ces saillies étant réparties sur une portion majeure de la surface intérieure et étant dimensionnées et agencées de manière que, dans l'état après glissement, la pression de contact résultant de la dilatation est essentiellement concentrée sur les zones élevées des saillies.

2. Enveloppe suivant la revendication 1, caractérisée en ce que les saillies (31) sont moulées d'une pièce avec une base (37) d'une épaisseur uniforme.

3. Enveloppe suivant la revendication 1 ou 2, caractérisée en ce que les saillies (31, 43) sont réparties de façon uniforme à des distances mutuelles d'une grandeur telle que ces saillies se déplacent essentiellement indépendamment l'une de l'autre.

4. Enveloppe suivant l'une quelconque des revendications précédentes, caractérisée en ce que les saillies (31; 43) sont des segments sphériques s'étendant sur moins d'une moitié de la sphère.

5. Enveloppe suivant la revendication 4, caractérisé en ce que les segments sphériques s'étendent sur environ 1/4 à environ 1/3 du diamètre de la sphère.

6. Enveloppe suivant l'une quelconque des revendications précédentes, caractérisée en ce qu'elle comprend au moins une partie extrême (39) sans saillies, cette partie extrême étant conçue pour entourer le câble.

7. Enveloppe suivant l'une quelconque des revendications précédentes, caractérisée en ce qu'elle est pourvue de moyens d'aide au glissement sur sa surface intérieure.

8. Enveloppe suivant l'une quelconque des revendications précédentes, caractérisée en ce qu'elle est conçue pour glisser sur une partie extrême d'un câble électrique à plusieurs conducteurs (3), une gaine de câble (5) étant enlevée sur une certaine distance, et des parties extrêmes de conducteur (9, 11, 13) du câble (3) étant mises à nues dans la partie extrême du câble, et en ce que l'enveloppe (15) comprend une première partie (19) en forme de poche, destinée à être glissée de façon extensible sur une partie extrême de la gaine de câble (5), ainsi que plusieurs secondes parties (23, 25, 27) en forme de branches, pendant depuis la première partie susdite et adaptées pour être glissées de façon expansible sur les parties extrêmes de conducteur (9, 11, 13).

Fig. 1

Fig.2

Fig.3